# EUROPEAN PATENT SPECIFICATION

(11) **EP 2 546 947 B1**
(45) Date of publication and mention of the grant of the patent: **01.07.2020**
(21) Application number: 12176618.2
(22) Date of filing: 16.07.2012
(51) Int. Cl.: H02J 3/38

(54) **Distributed power harvesting systems using DC power sources**
Erntesysteme mit verteilter Leistung mithilfe von Gleichstromquellen
Systèmes de collecte d'énergie distribuée utilisant des sources de courant continu

(30) Priority: 14.07.2011 US 201113182758
(43) Date of publication of application: 16.01.2013
(60) Divisional application: 20176744.9
(73) Proprietor: Solaredge Technologies Ltd., Herzeliya 4673335 (IL)
(72) Inventor: Adest, Meir, 45240 HOD Hasharon (IL); Handelsman, Lior, 45240 HOD Hasharon (IL); Galin, Yoav, 45240 HOD Hasharon (IL); Fishelov, Amir, 45240 HOD Hasharon (IL); Sella, Guy, 45240 HOD Hasharon (IL); Gazit, Meir, 45240 HOD Hasharon (IL)
(74) Representative: V.O.

(56) References cited:
- WO-A2-2008/132553
- US-A1- 2008 143 188
- US-A1- 2009 206 666
- US-A1- 2011 084 553
- US-A1- 2011 273 015

## Description

### CROSS REFERENCE TO RELATED APPLICATIONS

The present application is a continuation-in-part application of US patent application serial number 11/950,271 filed Dec. 4, 2007 by the same inventors.

### BACKGROUND

### 1. Field of the Invention

The field of the invention relates generally to power production from distributed DC power sources, and particularly to a photovoltaic panel having series connected photovoltaic strings the outputs of which are connected in parallel.

### 2. Related Arts

The recent increased interest in renewable energy has led to increased research in systems for distributed generation of energy, such as photovoltaic cells (PV), fuel cells, batteries (e.g., for hybrid cars), etc. Various topologies have been proposed for connecting these power sources to the load, taking into consideration various parameters, such as voltage/current requirements, operating conditions, reliability, safety, costs, etc. For example, most of example, most of these sources provide low voltage output (normally a few volts for one cell, or a few tens of volts for serially connected cells), so that many of them need to be connected serially to achieve the required operating voltage. Conversely, a serial connection may fail to provide the required current, so that several strings of serial connections may need to be connected in parallel to provide the required current.

It may be also known that power generation from each of these sources depends on manufacturing, operating, and environmental conditions. For example, various inconsistencies in manufacturing may cause two identical sources to provide different output characteristics. Similarly, two identical sources may react differently to operating and/or environmental conditions, such as load, temperature, etc. In practical installations, different source may also experience different environmental conditions, e.g., in solar power installations some panels may be exposed to full sun, while others be shaded, thereby delivering different power output. In a multiple-battery installation, some of the batteries may age differently, thereby delivering different power output. While these problems and the solutions provided by the subject invention may be applicable to any distributed power system, the following discussion turns to solar energy so as to provide better understanding by way of a concrete example.

In view of the above, a newly proposed topology for connecting multiple DC power sources to the load should also lend itself to easy testing and operational verification during and after installation. Document US2008/0143188 A1 discloses a photovoltaic system comprising sub strings of photovoltaic cells coupled to DC DC optimal power point converters. Bypass diodes are also disclosed.

### BRIEF SUMMARY

According to exemplary aspects there may be provided a photovoltaic panel with multiple photovoltaic sub-strings including serially-connected photovoltaic cells and having direct current (DC) outputs adapted for interconnection in parallel into a parallel-connected DC power source. A direct current (DC) power converter including input terminals and output terminals may be adapted for coupling to the parallel-connected DC power source and for converting an input power received at the input terminals to an output power at the output terminals. The direct current (DC) power converter may have a control loop configured to set the input power received at the input terminals according to a previously determined criterion. The control loop may be adapted to receive a feedback signal from the input terminals for maximizing the input power. A bypass diode may be connected in shunt across the input terminals of the converter. The bypass diode functions by passing current during a failure of any of the sub-strings and/or a partial shading of the sub-strings. The bypass diode may be a single bypass diode connected across the parallel-connected DC power source. The DC power converter may convert the input power at high current to the output power at a lower current. The output terminals may be connectible with wire cables to a load, and the DC power converter may be configured to reduce energy loss through the wire cables to the load.

According to further aspects there may be provided a distributed power harvesting system including a photovoltaic panel having multiple sub-strings including serially-connected photovoltaic cells. The sub-strings may be connectible in parallel to provide a parallel-connected DC power source. A power converter has input terminals which may be adapted for attaching to the parallel-connected DC power source. A bypass diode may be typically connected across the parallel-connected DC power source. A load may be connectible to the output terminals. The power converter may include a circuit loop configured to set input power received at the input terminals according to a previously determined criterion. The previously determined criterion may be usually a maximum input power.

According to further aspects, a method for power harvesting in a system including a photovoltaic panel with multiple sub-strings and a power converter. The sub-strings may be serially-connected photovoltaic cells. The power converter has input terminals and output terminals. The sub-strings may be connected in parallel to provide a parallel-connected DC power source. The input terminals of the converter may be attached to the parallel-connected DC power source. A single bypass diode may be typically attached across the parallel-connected DC power source. Power may be converted by the power converter from the input terminals to the output terminals. During the conversion, the input power received at the input terminals may be set according to a previously determined criterion. The output terminals may be connected to a load. While converting power, the current output from the output terminals may be reduced, thereby reducing energy losses.

### BRIEF DESCRIPTION OF THE DRAWINGS

The accompanying drawings, which are incorporated in and constitute a part of this specification, exemplify the embodiments of the present invention and, together with the description, serve to explain and illustrate principles of the invention. The drawings are intended to illustrate major features of the exemplary embodiments in a diagrammatic manner. The drawings are not intended to depict every feature of actual embodiments nor relative dimensions of the depicted elements, and are not drawn to scale.
FIG. 1 illustrates a conventional centralized power harvesting system using DC power sources.
FIG. 2 illustrates current versus voltage characteristic curves for one serial string of DC sources.
FIG. 3 illustrates a distributed power harvesting system, according to aspects of the invention, using DC power sources.
FIGS. 4A and 4B illustrate the operation of the system of FIG. 3 under different conditions, according to aspects of the invention.
FIG. 4C illustrates a feature of the invention wherein the inverter controls the input current.
FIG. 5 illustrates a distributed power harvesting system, according to other aspects of the invention, using DC power sources.
FIG. 6 illustrates an exemplary DC-to-DC converter according to aspects of the invention.
FIG. 7 illustrates a power converter, according to aspects of the invention including control features of the aspects of the invention.
Figure 8 illustrates characteristic current-voltage curves of a single photovoltaic cell at different illumination levels.
FIG. 9 illustrates an arrangement of a solar panel according to conventional art.
FIG. 10 shows an arrangement of a solar panel according to a feature of the present invention.
FIG. 11 illustrates a method illustrating various exemplary aspects of the present invention.

The foregoing and/or other aspects will become apparent from the following detailed description when considered in conjunction with the accompanying drawing figures.

### DETAILED DESCRIPTION

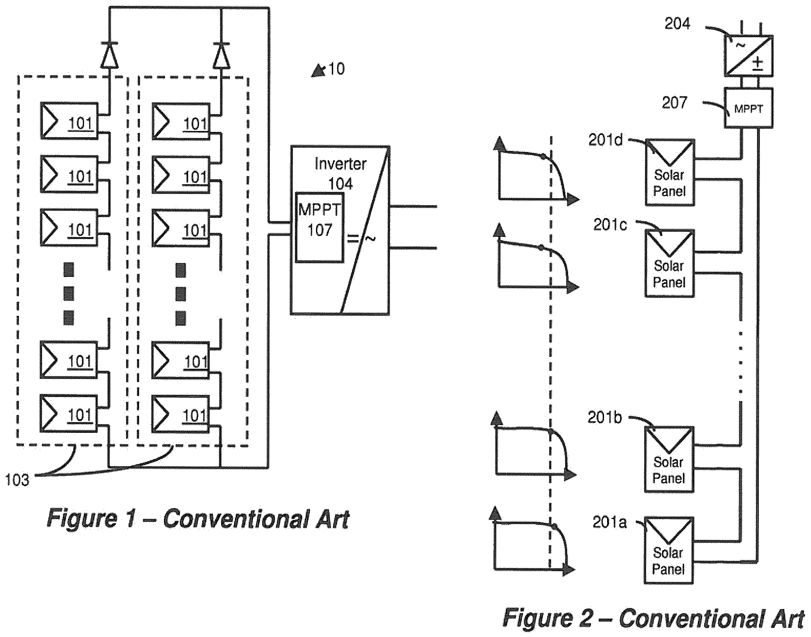

A conventional installation of solar power system 10 is illustrated in FIG. 1. Since the voltage provided by each individual solar panel 101 may be low, several panels may be connected in series to form a string of panels 103. For a large installation, when higher current may be required, several strings 103 may be connected in parallel to form the overall system 10. The solar panels may be mounted outdoors, and their leads may be connected to a maximum power point tracking (MPPT) module 107 and then to an inverter 104. The MPPT 107 may be typically implemented as part of the inverter 104. The harvested power from the DC sources may be delivered to the inverter 104, which converts the fluctuating direct-current (DC) into alternating-current (AC) having a desired voltage and frequency, which may be usually 110V or 220V at 60 Hz, or 220V at 50 Hz (It may be interesting to note the even in the US many inverters produce 220V, which may be then split into two 110V feeds in the electric box). The AC current from the inverter 104 may then be used for operating electric appliances or fed to the power grid. Alternatively, if the installation is not tied to the grid, the power extracted from the inverter maybe directed to a conversion and charge/discharge circuit to store the excess power created as charge in batteries. In case of a battery-tied application, the inversion stage might be skipped altogether, and the DC output of the MPPT stage 107 may be fed into the charge/discharge circuit.

As noted above, each solar panel 101 supplies relatively very low voltage and current. A possible challenge facing the solar array designer may be to produce a standard AC current at 120V or 220V root-mean-square (RMS) from a combination of the low voltages of the solar panels. The delivery of high power from a low voltage requires very high currents, which may cause large conduction losses on the order of the second power of the current (I²). Furthermore, a power inverter, such as the inverter 104, which may be used to convert DC current to AC current, may be most efficient when its input voltage may be slightly higher than its output RMS voltage multiplied by the square root of 2. Hence, in many applications, the power sources, such as the solar panels 101, may be combined in order to reach the correct voltage or current. The most common method connects the power sources in series in order to reach the desirable voltage and in parallel in order to reach the desirable current, as shown in FIG. 1. A large number of the panels 101 may be connected into a string 103 and the strings 103 may be connected in parallel to the power inverter 104. The panels 101 may be connected in series in order to reach the minimal voltage required for the inverter. Multiple strings 103 may be connected in parallel into an array to supply higher current, so as to enable higher power output.

While this configuration may be advantageous in terms of cost and architecture simplicity, several drawbacks may be identified. One recognized drawback may be inefficiencies cause by non-optimal power draw from each individual panel, as explained below. As explained above, the output of the DC power sources may be influenced by many conditions. Therefore, to maximize the power draw from each source, one needs to draw the combination of voltage and current that provides the peak power for the currently prevailing conditions. As conditions change, the combination of voltage and current draw may need to be changed as well.

FIG. 2 illustrates one serial string of DC sources, e.g., solar panels 201a - 201d, connected to MPPT circuit 207 and inverter 204. The current versus voltage (IV) characteristics plotted (210a - 210d) to the left of each DC source 201. For each DC source 201, the current decreases as the output voltage increases. At some voltage value the current goes to zero, and in some applications may assume a negative value, meaning that the source becomes a sink. Bypass diodes may be used to prevent the source from becoming a sink. The power output of each source 201, which may be equal to the product of current and voltage (P=I*V), varies depending on the voltage drawn from the source.

At a certain current and voltage, close to the falling off point of the current, the power reaches its maximum. It may be desirable to operate a power generating cell at this maximum power point. The purpose of the MPPT may be to find this point and operate the system at this point so as to draw the maximum power from the sources.

In a typical, conventional solar panel array, different algorithms and techniques may be used to optimize the integrated power output of the system 10 using the MPPT module 107. The MPPT module 107 receives the current extracted from all of the solar panels together and tracks the maximum power point for this current to provide the maximum average power such that if more current may be extracted, the average voltage from the panels starts to drop, thus lowering the harvested power. The MPPT module 107 maintains a current that yields the maximum average power from the overall system 10.

However, since the sources 201a - 201d may be connected in series to a single MPPT 207; the MPPT must select a single point, which would be somewhat of an average of the MPP of the serially connected sources. In practice, it may be very likely that the MPPT would operate at a current-voltage I-V point that may be optimum to only a few or none of the sources. In the example of FIG. 2, the selected point may be the maximum power point for source 201b, but may be off the maximum power point for sources 201a, 201c and 201d. Consequently, the arrangement maybe not operated at best achievable efficiency.

Turning back to the example of a solar power system 10 of FIG. 1, fixing a predetermined constant output voltage from the strings 103 may cause the solar panels to supply lower output power than otherwise possible. Further, each string carries a single current that may be passed through all of the solar panels along the string. If the solar panels are mismatched due to manufacturing differences, aging or if they malfunction or are placed under different shading conditions, the current, voltage and power output of each panel may be different. Forcing a single current through all of the panels of the string causes the individual panels to work at a non-optimal power point and can also cause panels which may be highly mismatched to generate "hot spots" due to the high current flowing through them. Due to these and other drawbacks of conventional centralized methods, the solar panels have to be matched properly. In some cases external diodes may be used to bypass the panels that may be highly mismatched. In conventional multiple string configurations all strings have to be composed of exactly the same number of solar panels and the panels may be selected of the same model and must be installed at exactly the same spatial orientation, being exposed to the same sunlight conditions at all times. This may be difficult to achieve and can be very costly.

Various different topologies have been proposed m order to overcome the above deficiencies of the serial installation. For example, some have proposed to have inverters coupled to each DC source, and connect all of the inverters in parallel. Others have proposed to have DC/DC converter connected to each DC source, and to connect all of the converters serially or in parallel to a central inverter. Among the DC/DC converters proposed for use with the DC sources may be boost converter, buck converter, buck-boost converter, or a Cuk converter. It has also been proposed to incorporate MPPT into each DC power source, e.g., into each solar panel, and connect the panels serially.

As already mentioned above, various environmental and operational conditions impact the power output of DC power sources. In the case of solar panels, solar radiance, ambient temperature, and shading, whether from near objects such as trees or far objects such as clouds, impact the power extracted from each solar panel. Depending on the number and type of panels used, the extracted power may vary widely in the voltage and current. Owners and even professional installers find it difficult to verify the correct operation of the solar system. With time, many other factors, such as aging, dust and dirt collection and module degradation affect the performance of the solar array.

The sensitivity of photovoltaic panels to external conditions may be even more profound when concentrated photovoltaics (CPV) may be used. In such installations, the sun radiation may be concentrated by use of lenses or mirrors onto small cells. These cells may be much more efficient then typical PV cells and use a technology knows as double-or triple-junction, in which a number of p-n junctions may be constructed one on top of the other--each junction converts light from a certain part of the spectrum and allows the rest to pass-through to the next junction. Thus, these cells may be much more efficient (with peak efficiencies of over 40%). Since these cells may be expensive, they may be usually used in CPV applications which call for smaller cells. However, the power output of CPV installations now depends upon fluctuations in the intensity of different parts of the spectrum of the sun (and not only the total intensity), and imperfections or distortions in the lenses or mirrors used. Thus, having a single MPPT for many panels will lead to significant power loss, and great benefits may be realized from using a panel- (or cell-) level MPPT as described in aspects of the present invention.

Another field in which traditional photovoltaic installations face many problems may be the developing market of building-integrated photovoltaics (BIPV). In BIPV installations, the panels may be integrated into buildings during construction-either as roof panels or as structural or additional elements in the walls and windows. Thus, BIPV installations suffer greatly from local partial shading due to the existence of other structural elements in the vicinity of the panels. Moreover, the panels may be naturally positioned on many different facets of the building, and therefore the lighting conditions each panel experiences may vary greatly. Since in traditional solutions the panels may be stringed together to a joint MPPT, much power may be lost. A solution that could harvest more power would obviously be very beneficial in installations of this type.

Yet another problem with traditional installations may be the poor energy utilization in cases of low sun-light. Most inverters require a certain minimal voltage (typically between 150V to 350V) in order to start functioning. If there may be low light, the aggregated voltage from the panels may not reach this minimal value, and the power may be thus lost. A solution that could boost the voltage of panels suffering from low light, would therefore allow for the produced energy to be harvested.

During installation of a solar array according to the conventional configurations 10, the installer can verify the correctness of the installation and performance of the solar array by using test equipment to check the current-voltage characteristics of each panel, each string and the entire array. In practice, however, individual panels and strings may be generally either not tested at all or tested only prior to connection. This happens because current measurement may be done by either a series connection to the solar array or a series resistor in the array which may be typically not convenient. Instead, only high-level pass/fail testing of the overall installation may be performed.

After the initial testing of the installation, the solar array may be connected to inverter 104 which optionally includes a monitoring module which monitors performance of the entire array. The performance information gathered from monitoring within the inverter 104 includes integrated power output of the array and the power production rate, but the information lacks any fine details about the functioning of individual solar panels.

Therefore, the performance information provided by monitoring at the inverter 104 may be usually not sufficient to understand if power loss may be due to environmental conditions, from malfunctions or from poor installation or maintenance of the solar array. Furthermore, integrated information does not pinpoint which of solar panels 101 may be responsible for a detected power loss.

The topology provided by aspects of the present invention may solve many of the problems associated with, and may have many advantages over, the conventional art topologies. For example, aspects may enable serially connecting mismatched power sources, such as mismatched solar panels, panel of different models and power ratings, and even panels from different manufacturers and semiconductor materials. It may also allow serial connection of sources operating under different conditions, such as, e.g., solar panels exposed to different light or temperature conditions. It may also enable installations of serially connected panels at different orientations or different sections of the roof or structure. This and other features and advantages will become apparent from the following detailed description.

Aspects of the present invention provide a system and method for combining power from multiple DC power sources into a single power supply. According to aspects of the present invention, each DC power source may be associated with a DC-DC power converter. Modules formed by coupling the DC power sources to their associated converters may be coupled in series to provide a string of modules. The string of modules may be then coupled to an inverter having its input voltage fixed. A maximum power point control loop in each converter harvests the maximum power from each DC power source and transfers this power as output from the power converter. For each converter, substantially all the input power may be converted to the output power, such that the conversion efficiency may be 90% or higher in some situations. Further, the controlling may be performed by fixing the input current or input voltage of the converter to the maximum power point and allowing output voltage of the converter to vary. For each power source, one or more sensors perform the monitoring of the input power level to the associated converter. In some aspects of the invention, a microcontroller may perform the maximum power point tracking and control in each converter by using pulse width modulation to adjust the duty cycle used for transferring power from the input to the output.

One aspect of the present invention provides a greater degree of fault tolerance, maintenance and serviceability by monitoring, logging and/or communicating the performance of each solar panel. In one aspect of the invention, the microcontroller that may be used for maximum power point tracking may also be used to perform the monitoring, logging and communication functions. These functions allow for quick and easy troubleshooting during installation, thereby significantly reducing installation time. These functions may be also beneficial for quick detection of problems during maintenance work. Aspects of the present invention allow easy location, repair, or replacement of failed solar panels. When repair or replacement may be not feasible, bypass features of the current invention provide increased reliability.

In one aspect, the present invention relates to arrays of solar cells where the power from the cells may be combined. Each converter may be attached to a single solar cell, or a plurality of cell connected in series, in parallel, or both, e.g., parallel connection of strings of serially connected cells. In one feature each converter may be attached to one panel of photovoltaic strings. However, while applicable in the context of solar power technology, the aspects of the present invention may be used in any distributed power network using DC power sources. For example, they may be used in batteries with numerous cells or hybrid vehicles with multiple fuel cells on board. The DC power sources may be solar cells, solar panels, electrical fuel cells, electrical batteries, and the like. Further, although the discussion below relates to combining power from an array of DC power sources into a source of AC voltage, the aspects of the present invention may also apply to combining power from DC sources into another DC voltage.

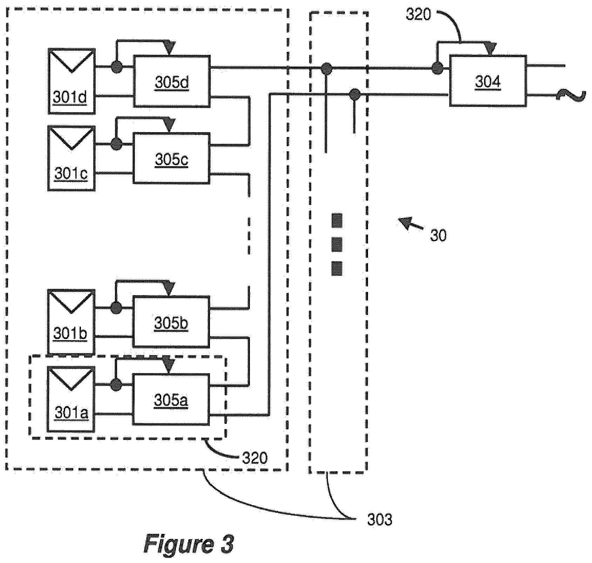

FIG. 3 illustrates a distributed power harvesting configuration 30, according to a feature of the present invention. Configuration 30 enables connection of multiple power sources, for example solar panels 301a - 301d, to a single power supply. In one aspect of the invention, the series string of all of the solar panels may be coupled to an inverter 304. In another aspect of the invention, several serially connected strings of solar panels may be connected to a single inverter 304. The inverter 304 may be replaced by other elements, such as, e.g., a charging regulator for charging a battery bank.

In configuration 30, each solar panel 301a - 301d may be connected to a separate power converter circuit 305a - 305d. One solar panel together with its associated power converter circuit forms a module, e.g., module 320. Each converter 305a - 305d may adapt optimally to the power characteristics of the connected solar panel 301a - 301d and transfers the power efficiently from converter input to converter output. The converters 305a - 305d can be buck converters, boost converters, buck/boost converters, flyback or forward converters, etc. The converters 305a - 305d may also contain a number of component converters, for example a serial connection of a buck and a boost converter.

Each converter 305a - 305d may include a control loop that receives a feedback signal, not from the converter's output current or voltage, but rather from the converter's input coming from the solar panel 301. An example of such a control loop may be a maximum power point tracking (MPPT) loop. The MPPT loop in the converter locks the input voltage and current from each solar panel 301a- 301d to its optimal power point. Conventional DC-to-DC converters may have a wide input voltage range at their input and an output voltage that may be predetermined and fixed. In these conventional DC-to-DC voltage converters, a controller within the converter monitors the current or voltage at the input, and the voltage at the output. The controller determines the appropriate pulse width modulation (PWM) duty cycle to fix the output voltage to the predetermined value by increasing the duty cycle if the output voltage drops. Accordingly, the conventional converter includes a feedback loop that closes on the output voltage and uses the output voltage to further adjust and fine tune the output voltage from the converter. As a result of changing the output voltage, the current extracted from the input may be also varied.

In the converters 305a - 305d, according to aspects of the present invention, a controller within the converter 405 monitors the voltage and current at the converter input and determines the PWM in such a way that maximum power may be extracted from the attached panel 301a - 301d. The controller of the converter 405 dynamically tracks the maximum power point at the converter input. In the aspects of the present invention, the feedback loop may be closed on the input power in order to track maximum input power rather than closing the feedback loop on the output voltage as performed by conventional DC-to-DC voltage converters.

As a result of having a separate MPPT circuit in each converter 305a - 305d, and consequently for each solar panel 301a - 301d, each string 303 in the feature shown in FIG. 3 may have a different number or different brand of panels 301a - 301d connected in series. The circuit of FIG. 3 continuously performs MPPT on the output of each solar panel 301a - 301d to react to changes in temperature, solar radiance, shading or other performance factors that impact that particular solar panel 301a - 301d. As a result, the MPPT circuit within the converters 305a - 305d may harvest the maximum possible power from each panel 301a - 301d and transfers this power as output regardless of the parameters impacting the other solar panels.

As such, the aspects of the invention shown in FIG. 3 continuously track and maintain the input current and the input voltage to each converter at the maximum power point of the DC power source providing the input current and the input voltage to the converter. The maximum power of the DC power source that may be input to the converter may be also output from the converter. The converter output power may be at a current and voltage different from the converter input current and voltage. The output current and voltage from the converter may be responsive to requirements of the series connected portion of the circuit.

In one aspect of the invention, the outputs of converters 305a - 305d may be series connected into a single DC output that forms the input to the load or power supplier, in this example, inverter 304. The inverter 304 converts the series connected DC output of the converters into an AC power supply. The load, in this case inverter 304, regulates the voltage at the load's input. That may be, in this example, an independent control loop 320 holds the input voltage at a set value, say 400 volts. Consequently, the input current to the inverter may be dictated by the available power, and this may be the current that flows through all serially connected DC sources. On the other hand, while the output of the DC-DC converters must be at the current input of the inverter, the current and voltage input to the converter may be independently controlled using the MPPT.

In the conventional art, the input voltage to the load was allowed to vary according to the available power. For example, when a lot of sunshine may be available in a solar installation, the voltage input to the inverter can vary even up to 1000 volts. Consequently, as sunshine illumination varies, the voltage varies with it, and the electrical components in the inverter (or other power supplier or load) may be exposed to varying voltage. This tends to degrade the performance of the components and ultimately causes them to fail. On the other hand, by fixing the voltage or current to the input of the load or power supplier, here the inverter, the electrical components may be always exposed to the same voltage or current and therefore would have extended service life. For example, the components of the load (e.g., capacitors, switches and coil of the inverter) may be selected so that at the fixed input voltage or current they operate at, say, 60% of their rating. This would improve the reliability and prolong the service life of the component, which may be critical for avoiding loss of service in applications such as solar power systems.

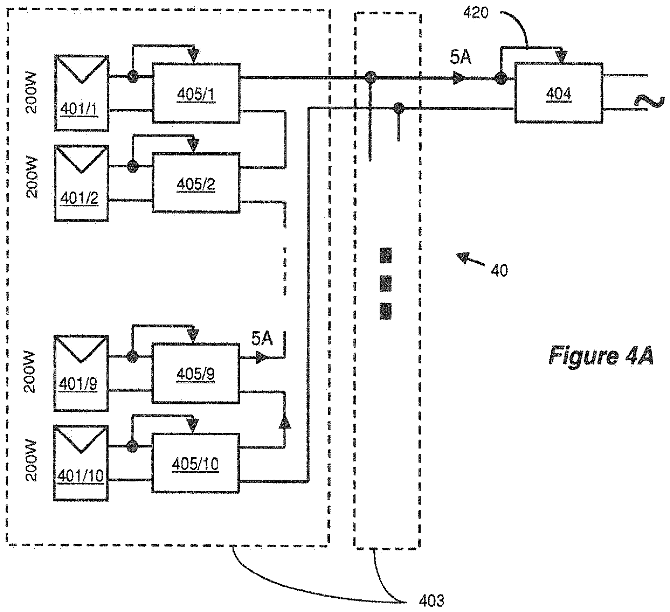

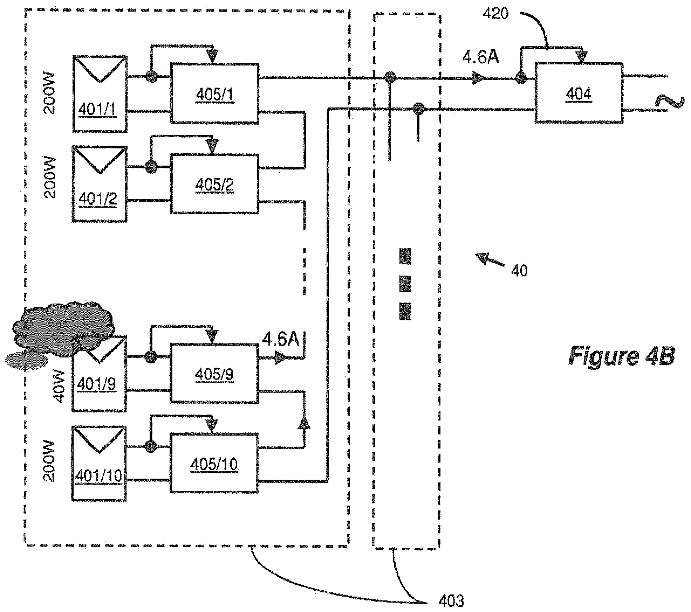

FIGS. 4A and 4B illustrate the operation of the system of FIG. 3 under different conditions, according to aspects of the invention. The exemplary configuration 40 may be similar to configuration 30 of FIG. 3. In the example shown, ten DC power sources 401 *I* 1 through 401 *I* 10 may be connected to ten power converters 405 *I* 1 through 405 *I* 10, respectively. The modules formed by the DC power sources and their corresponding converters may be coupled together in series to form a string 403. In one aspect of the invention, the series-connected converters 405 may be coupled to a DC-to-AC inverter 404.

The DC power sources may be solar panels and the example may be discussed with respect to solar panels as one illustrative case. Each solar panel 401 may have a different power output due to manufacturing tolerances, shading, or other factors. For the purpose of the present example, an ideal case may be illustrated in FIG. 4A, where efficiency of the DC-to-DC conversion may be assumed to be 100% and the panels 501 may be assumed to be identical. In some aspects of the invention, efficiencies of the converters may be quite high and range at about 95%-99%. So, the assumption of 100% efficiency may be not unreasonable for illustration purposes. Moreover, according to embodiments of the subject invention, each of the DC-DC converters may be constructed as a power converter, i.e., it transfers to its output the entire power it receives in its input with very low losses.

Power output of each solar panel 401 may be maintained at the maximum power point for the panel by a control loop within the corresponding power converter 405. In the example shown in FIG. 4A, all of the panels may be exposed to full sun illumination and each solar panel 401 provides 200 W of power. Consequently, the MPPT loop will draw current and voltage level that will transfer the entire 200 W from the panel to its associated converter. That may be, the current and voltage dictated by the MPPT form the input current I in and input voltage V in to the converter. The output voltage may be dictated by the constant voltage set at the inverter 404, as will be explained below. The output current I out would then be the total power, i.e., 200 W, divided by the output voltage V out.

As noted above, according to a feature of the invention, the input voltage to inverter 404 may be controlled by the inverter (in this example, kept constant), by way of control loop 420. For the purpose of this example, assume the input voltage may be kept as 400V (which may be an ideal value for inverting to 220VAC). Since we assume that there may be ten serially connected power converters, each providing 200 W, we can see that the input current to the inverter 404 may be 2000 W/400V=5 A. Thus, the current flowing through each of the converters 401 *I* 1 - 401 *I* 10 must be 5 A. This means that in this idealized example each of the converters provides an output voltage of 200 W/5 A=40V. Now, assume that the MPPT for each panel (assuming perfect matching panels) dictates V MPP =32V. This means that the input voltage to the inverter would be 32V, and the input current would be 200 W/32V=6.25 A.

We now turn to another example, wherein the system may be still maintained at an ideal mode (i.e., perfectly matching DC sources and entire power may be transferred to the inverter), but the environmental conditions may be not ideal. For example, one DC source may be overheating, may be malfunctioning, or, as in the example of FIG. 4B, the ninth solar panel 401 I 9 may be shaded and consequently produces only 40 W of power. Since we keep all other conditions as in the example of FIG. 4A, the other nine solar panels 401 may be unshaded and still produce 200 W of power. The power converter 405 *I* 9 includes MPPT to maintain the solar panel 501 *I* 9 operating at the maximum power point, which may be now lowered due to the shading.

The total power available from the string may be now 9x200 W+40 W=1840 W. Since the input to the inverter may be still maintained at 400V, the input current to the inverter will now be 1840 W/40V=4.6 A. This means that the output of all of the power converters 405 *I* 1 - 405 *I* 10 in the string must be at 4.6 A. Therefore, for the nine unshaded panels, the converters will output 200 W/4.6 A=43.5V. On the other hand, the converter 405 *I* 9 attached to the shaded panel 401 *I* 9 will output 40 W/4.6 A=8.7V. Checking the math, the input to the inverter can be obtained by adding nine converters providing 43.5V and one converter providing 8.7V, i.e., (9x43.5V)+8.7V=400V.

The output of the nine non-shaded panels would still be controlled by the MPPT as in FIG. 4A, thereby standing at 32V and 6.25 A. On the other hand, since the nines panel 401 / 9 may be shaded, let's assume its MPPT dropped to 28V. Consequently, the output current of the ninth panel is 40 W/28V=1.43 A. As can be seen by this example, all of the panels may be operated at their maximum power point, regardless of operating conditions. As shown by the example of FIG. 4B, even if the output of one DC source drops dramatically, the system still maintains relatively high power output by fixing the voltage input to the inverter, and controlling the input to the converters independently so as to draw power from the DC source at the MPP.

As can be appreciated, the benefit of the topology illustrated in FIGS. 4A and 4B may be numerous. For example, the output characteristics of the serially connected DC sources, such as solar panels, need not match. Consequently, the serial string may utilize panels from different manufacturers or panels installed on different parts of the roofs (i.e., at different spatial orientation). Moreover, if several strings are connected in parallel, it may be not necessary that the strings match; rather each string may have different panels or different number of panels. This topology may also enhance reliability by alleviating the hot spot problem. That may be, as shown in FIG. 4A the output of the shaded panel 401 *I* 9 may be 1.43 A, while the current at the output of the un-shaded panels may be 6.25 A. This discrepancy in current when the components may be series connected causes a large current being forced through the shaded panel that may cause overheating and malfunction at this component. However, by aspects of the topology described herein, the input voltage may be set independently, and the power draw from each panel to its converter may be set independently according to the panels MPP at each point in time, the current at each panel may be independent on the current draw from the serially connected converters.

It may be easily realized that since the power may be optimized independently for each panel, panels could be installed in different facets and directions in BIPV installations.

Thus, the problem of low power utilization in building-integrated installations may be solved, and more installations may now be profitable.

The aspects of described system may also solve the problem of energy harvesting in low light conditions. Even small amounts of light may be enough to make the converters 405 operational, and they then start transferring power to the inverter. If small amounts of power may be available, there will be a low current flow but the voltage will be high enough for the inverter to function, and the power will indeed be harvested.

According to aspects of the invention, the inverter 404 includes a control loop 420 to maintain an optimal voltage at the input of inverter 404. In the example of FIG. 4B, the input voltage to inverter 404 may be maintained at 400V by the control loop 420. The converters 405 may be transferring substantially all of the available power from the solar panels to the input of the inverter 404. As a result, the input current to the inverter 404 may be dependent only on the power provided by the solar panels and the regulated set, i.e., constant, voltage at the inverter input.

The conventional inverter 104, shown in FIG. 1 and FIG. 3A, may be required to have a very wide input voltage to accommodate for changing conditions, for example a change in luminance, temperature and aging of the solar array. This may be in contrast to the inverter 404 that may be designed according to aspects of the present invention. The inverter 404 does not require a wide input voltage and may be therefore simpler to design and more reliable. This higher reliability may be achieved, among other factors, by the fact that there may be no voltage spikes at the input to the inverter and thus the components of the inverter experience lower electrical stress and may last longer.

When the inverter 404 is a part of the circuit, the power from the panels may be transferred to a load that may be connected to the inverter. To enable the inverter 404 to work at its optimal input voltage, any excess power produced by the solar array, and not used by the load, may be dissipated. Excess power may be handled by selling the excess power to the utility company if such an option may be available. For off-grid solar arrays, the excess power may be stored in batteries. Yet another option may be to connect a number of adjacent houses together to form a micro-grid and to allow load-balancing of power between the houses. If the excess power available from the solar array may be not stored or sold, then another mechanism may be provided to dissipate excess power.

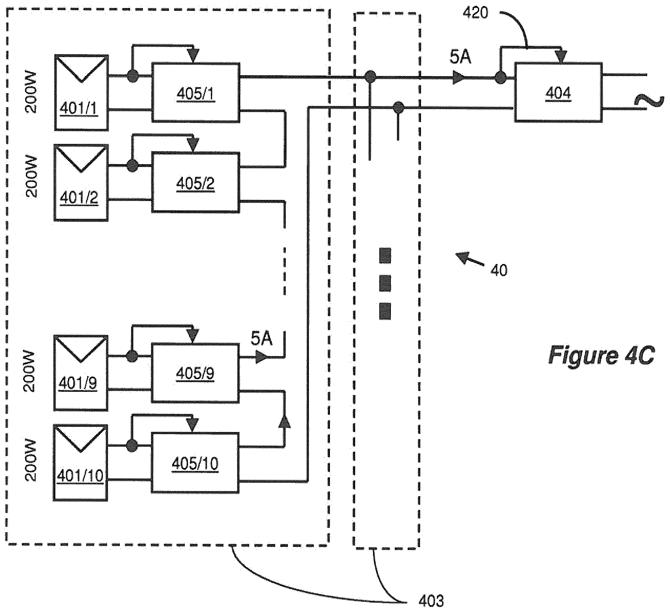

The features and benefits explained with respect to FIGS. 4A and 4B stem, at least partially, from having the inverter dictate the voltage provided at its input. Conversely, a design can be implemented wherein the inverter dictates the current at its input. Such an arrangement is illustrated in FIG. 4C. FIG. 4C illustrates a feature of the invention wherein the inverter controls the input current. Power output of each solar panel 401 may be maintained at the maximum power point for the panel by a control loop within the corresponding power converter 405. In the example shown in FIG. 4C, all of the panels may be exposed to full sun illumination and each solar panel 401 provides 200 W of power. Consequently, the MPPT loop will draw current and voltage level that will transfer the entire 200 W from the panel to its associated converter. That may be, the current and voltage dictated by the MPPT form the input current I in and input voltage Yin to the converter. The output voltage may be dictated by the constant current set at the inverter 404, as will be explained below. The output voltage Vout would then be the total power, i.e., 200 W, divided by the output current I out.

As noted above, according to a feature of the invention, the input current to inverter 404 may be dictated by the inverter by way of control loop 420. For the purpose of this example, assume the input current may be kept as 5 A. Since we assume that there may be ten serially connected power converters, each providing 200 W, we can see that the input voltage to the inverter 404 is 2000 W/5 A=400V. Thus, the current flowing through each of the converters 401 *I* 1 - 401 *I* 10 must be 5 A. This means that in this idealized example each of the converters provides an output voltage of 200 W/5 A=40V. Now, assume that the MPPT for each panel (assuming perfect matching panels) dictates V MPP =32V. This means that the input voltage to the inverter would be 32V, and the input current would be 200 W/32V=6.25 A.

Consequently, similar advantages may be achieved by having the inverter control the current, rather than the voltage. However, unlike the conventional art, changes in the output of the panels may not cause changes in the current flowing to the inverter, as that may be dictated by the inverter itself. Therefore, if the inverter may be designed to keep the current or the voltage constant, then regardless of the operation of the panels, the current or voltage to the inverter will remain constant.

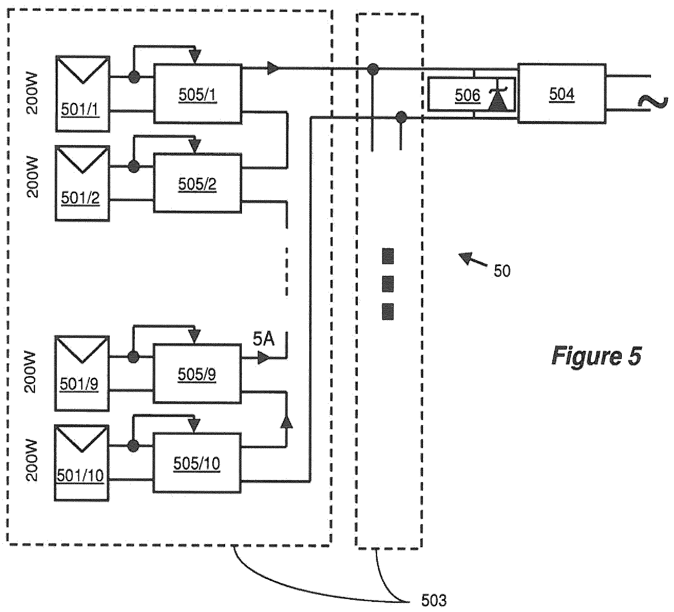

FIG. 5 illustrates a distributed power harvesting system, according to other aspects of the invention, using DC power sources. FIG. 5 illustrates multiple strings 503 coupled together in parallel. Each of the strings may be a series connection of multiple modules and each of the modules includes a DC power source 501 that may be coupled to a converter 505. The DC power source may be a solar panel. The output of the parallel connection of the strings 503 may be connected, again in parallel, to a shunt regulator 506 and a load controller 504. The load controller 504 may be an inverter as with the embodiments of FIGS. 4A and 4B. Shunt regulators automatically maintain a constant voltage across its terminals. The shunt regulator 506 may be configured to dissipate excess power to maintain the input voltage at the input to the inverter 504 at a regulated level and prevent the inverter input voltage from increasing. The current which flows through shunt regulator 506 may complement the current drawn by inverter 504 in order to ensure that the input voltage of the inverter may be maintained at a constant level, for example at 400V.

By fixing the inverter input voltage, the inverter input current may be varied according to the available power draw. This current may be divided between the strings 503 of the series connected converters. When each converter includes a controller loop maintaining the converter input voltage at the maximum power point of the associated DC power source, the output power of the converter may be determined. The converter power and the converter output current together determine the converter output voltage. The converter output voltage may be used by a power conversion circuit in the converter for stepping up or stepping down the converter input voltage to obtain the converter output voltage from the input voltage as determined by the MPPT.

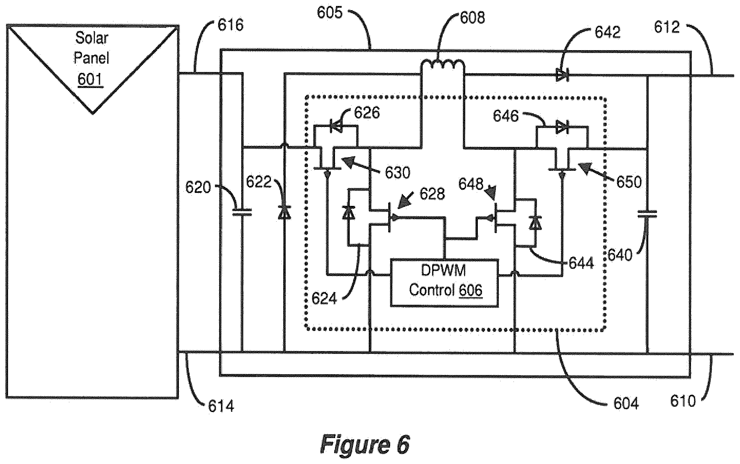

FIG. 6 illustrates an exemplary DC-to-DC converter 605 according to aspects of the invention. DC-to-DC converters may be conventionally used to either step down or step up a varied or constant DC voltage input to a higher or a lower constant voltage output, depending on the requirements of the circuit. However, in the feature of FIG. 6 the DC- DC converter may be used as a power converter, i.e., transferring the input power to output power, the input voltage varying according to the MPPT, while the output current being dictated by the constant input voltage to the inverter. That may be, the input voltage and current may vary at any time and the output voltage and current may vary at any time, depending on the operating condition of the DC power sources.

The converter 605 may be connected to a corresponding DC power source 601 at input terminals 614 and 616. The converted power of the DC power source 601 may be output to the circuit through output terminals 610, 612. Between the input terminals 614, 616 and the output terminals 610, 612, the remainder of the converter circuit may be located that includes input and output capacitors 620, 640, back flow prevention diodes 622, 642 and a power conversion circuit including a controller 606 and an inductor 608.

The inputs 616 and 614 may be separated by a capacitor 620 which acts as an open to a DC voltage. The outputs 610 and 612 may be also separated by a capacitor 640 that also acts an open to DC output voltage. These capacitors may be DC-blocking or AC-coupling capacitors that short when faced with alternating current of a frequency for which they may be selected. Capacitor 640 coupled between the outputs 610, 612 and also operates as a part of the power conversion circuit discussed below.

Diode 642 may be coupled between the outputs 610 and 612 with a polarity such that current may not backflow into the converter 605 from the positive lead of the output 612.

Diode 622 may be coupled between the positive output lead 612 through inductor 608 which acts a short for DC current and the negative input lead 614 with such polarity to prevent a current from the output 612 to backflow into the solar panel 601.

The DC power sources 601 may be solar panels. A potential difference exists between the wires 614 and 616 due to the electron-hole pairs produced in the solar cells of panel 601.

The converter 605 may maintain maximum power output by extracting current from the solar panel 601 at its peak power point by continuously monitoring the current and voltage provided by the panel and using a maximum power point tracking algorithm. The controller 606 may include an MPPT circuit or algorithm for performing the peak power tracking. Peak power tracking and pulse width modulation, PWM, may be performed together to achieve the desired input voltage and current. The MPPT in the controller 606 may be any conventional MPPT, such as, e.g., perturb and observe (P&O), incremental conductance, etc. However, notably the MPPT may be performed on the panel directly, i.e., at the input to the converter, rather than at the output of the converter. The generated power may be then transferred to the output terminals 610 and 612. The outputs of multiple converters 605 may be connected in series, such that the positive lead 612 of one converter 605 may be connected to the negative lead 610 of the next converter 605.

In FIG. 6, the converter 605 is shown as a buck plus boost converter. The term "buck plus boost" as used herein is a buck converter directly followed by a boost converter as shown in FIG. 6, which may also appear in the literature as "cascaded buck-boost converter". If the voltage is to be lowered, the boost portion may be substantially shorted. If the voltage may is be raised, the buck portion may be substantially shorted. The term "buck plus boost" differs from buck/boost topology which may be a classic topology that may be used when voltage is to be raised or lowered. The efficiency of "buck/boost" topology may be inherently lower then a buck or a boost. Additionally, for given requirements, a buck-boost converter may need bigger passive components then a buck plus boost converter in order to function. Therefore, the buck plus boost topology of FIG. 6 may have a higher efficiency than the buck/boost topology. However, the circuit of FIG. 6 continuously decides whether it may be bucking or boosting. In some situations when the desired output voltage may be similar to the input voltage, then both the buck and boost portions may be operational.

The controller 606 may include a pulse width modulator, PWM, or a digital pulse width modulator, DPWM, to be used with the buck and boost converter circuits. The controller 606 controls both the buck converter and the boost converter and determines whether a buck or a boost operation is to be performed. In some circumstances both the buck and boost portions may operate together. That may be, as explained with respect to the embodiments of FIGS.4A and 4B, the input voltage and current may be selected independently of the selection of output current and voltage. Moreover, the selection of either input or output values may change at any given moment, depending on the operation of the DC power sources. Therefore, in the feature of FIG. 6 the converter may be constructed so that at any given time a selected value of input voltage and current may be up converted or down converted depending on the output requirement.

In one implementation, an integrated circuit (IC) 604 may be used that incorporates some of the functionality of converter 605. IC 604 may be optionally a single ASIC able to withstand harsh temperature extremes present in outdoor solar installations. ASIC 604 may be designed for a high mean time between failures (MTBF) of more than 25 years.

However, a discrete solution using multiple integrated circuits may also be used in a similar manner. In the exemplary feature shown in FIG. 6, the buck plus boost portion of the converter 605 may be implemented as the IC 604. Practical considerations may lead to other segmentations of the system. For example, in one aspect, the IC 604 may include two ICs, one analog IC which handles the high currents and voltages in the system, and one simple low-voltage digital IC which includes the control logic. The analog IC may be implemented using power FETs which may alternatively be implemented in discrete components, FET drivers, A/Ds, and the like. The digital IC may form the controller 606.

In the exemplary circuit shown, the buck converter includes the input capacitor 620, transistors 628 and 630 a diode 622 positioned in parallel to transistor 628, and an inductor 608.

The transistors 628, 630 each have a parasitic body diode 624, 626. In the exemplary circuit shown, the boost converter includes the inductor 608, which may be shared with the buck converter, transistors 648 and 650 a diode 642 positioned in parallel to transistor 650, and the output capacitor 640. The transistors 648, 650 each have a parasitic body diode 644, 646.

As shown in FIG. 1, adding electronic elements in the series arrangement may reduce the reliability of the system, because if one electrical component breaks it may affect the entire system. Specifically, if a failure in one of the serially connected elements causes an open circuit in the failed element, current ceases to flow through the entire series, thereby causing the entire system to stop function. Aspects of the present invention provide a converter circuit where electrical elements of the circuit have one or more bypass routes associated with them that carry the current in case of the electrical element fails. For example, each switching transistor of either the buck or the boost portion of the converter has its own bypass. Upon failure of any of the switching transistors, that element of the circuit may be bypassed. Also, upon inductor failure, the current bypasses the failed inductor through the parasitic diodes of the transistor used in the boost converter.

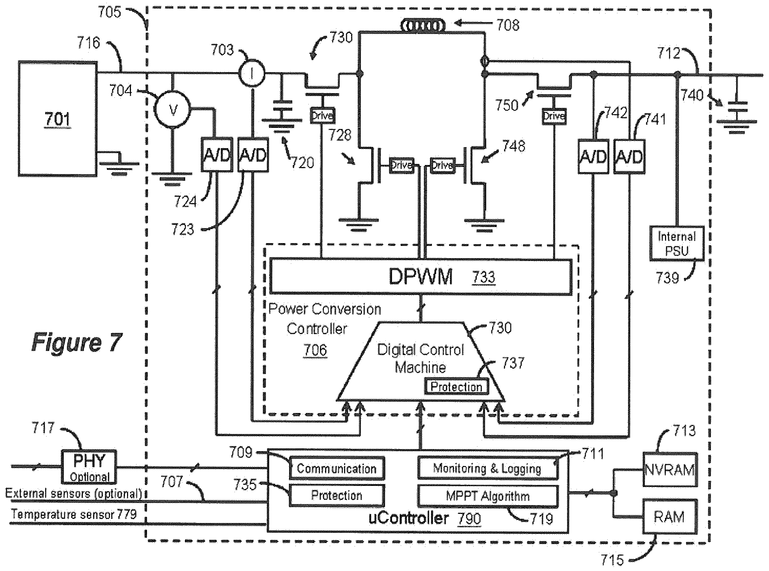

FIG. 7 illustrates a power converter, according to aspects of the invention. FIG. 7 highlights, among others, a monitoring and control functionality of a DC-to-DC converter 705. A DC voltage source 701 is also shown in the figure. Portions of a simplified buck and boost converter circuit may be shown for the converter 705. The portions shown include the switching transistors 728, 730, 748 and 750 and the common inductor 708.

Each of the switching transistors may be controlled by a power conversion controller 706. The power conversion controller 706 includes the pulse-width modulation (PWM) circuit 733, and a digital control machine 730 including a protection portion 737. The power conversion controller 706 may be coupled to microcontroller 790, which includes an MPPT module 719, and may also optionally include a communication module 709, a monitoring and logging module 711, and a protection module 735.

A current sensor 703 may be coupled between the DC power source 701 and the converter 705, and output of the current sensor 703 may be provided to the digital control machine 730 through an associated analog to digital converter 723. A voltage sensor 704 may be coupled between the DC power source 701 and the converter 705 and output of the voltage sensor 704 may be provided to the digital control machine 730 through an associated analog to digital converter 724. The current sensor 703 and the voltage sensor 704 may be used to monitor current and voltage output from the DC power source, e.g., the solar panel 701. The measured current and voltage may be provided to the digital control machine 730 and may be used to maintain the converter input power at the maximum power point.

The PWM circuit 733 controls the switching transistors of the buck and boost portions of the converter circuit. The PWM circuit may be a digital pulse-width modulation (DPWM) circuit. Outputs of the converter 705 taken at the inductor 708 and at the switching transistor 750 may be provided to the digital control machine 730 through analog to digital converters 741, 742, so as to control the PWM circuit 733.

A random access memory (RAM) module 715 and a non-volatile random access memory (NVRAM) module 713 may be located outside the microcontroller 790 but coupled to the microcontroller 790. A temperature sensor 779 and one or more external sensor interfaces 707 may be coupled to the microcontroller 790. The temperature sensor 779 may be used to measure the temperature of the DC power source 701. A physical interface 717 may be coupled to the microcontroller 790 and used to convert data from the microcontroller into a standard communication protocol and physical layer. An internal power supply unit 739 may be included in the converter 705.

In various aspects, the current sensor 703 may be implemented by various techniques used to measure current. In one aspect, the current measurement module 703 may be implemented using a very low value resistor. The voltage across the resistor will be proportional to the current flowing through the resistor. In another aspect, the current measurement module 703 may be implemented using current probes which use the Hall Effect to measure the current through a conductor without adding a series resistor. After translating the current to voltage, the data may be passed through a low pass filter and then digitized. The analog to digital converter associated with the current sensor 703 is shown as the A/D converter 723 in FIG. 7. Aliasing effect in the resulting digital data may be avoided by selecting an appropriate resolution and sample rate for the analog to digital converter. If the current sensing technique does not require a series connection, then the current sensor 703 may be connected to the DC power source 701 in parallel.

In one aspect, the voltage sensor 704 uses simple parallel voltage measurement techniques in order to measure the voltage output of the solar panel. The analog voltage may be passed through a low pass filter in order to minimize aliasing. The data may be then digitized using an analog to digital converter. The analog to digital converter associated with the voltage sensor 704 may be shown as the A/D converter 724 in FIG. 7. The AID converter 724 has sufficient resolution to generate an adequately sampled digital signal from the analog voltage measured at the DC power source 701 that may be a solar panel.

The current and voltage data collected for tracking the maximum power point at the converter input may be used for monitoring purposes also. An analog to digital converter with sufficient resolution may correctly evaluate the panel voltage and current. However, to evaluate the state of the panel, even low sample rates may be sufficient. A low-pass filter makes it possible for low sample rates to be sufficient for evaluating the state of the panel. The current and voltage date may be provided to the monitoring and logging module 711 for analysis.

The temperature sensor 779 enables the system to use temperature data in the analysis process. The temperature may be indicative of some types of failures and problems. Furthermore, in the case that the power source may be a solar panel, the panel temperature may be a factor in power output production.

The one or more optional external sensor interfaces 707 enable connecting various external sensors to the converter 705. External sensors may be used to enhance analysis of the state of the solar panel 701, or a string or an array formed by connecting the solar panels 701. Examples of external sensors include ambient temperature sensors, solar radiance sensors, and sensors from neighboring panels. External sensors may be integrated into the converter 705 instead of being attached externally.

In one aspect, the information acquired from the current and voltage sensors 703, 704 and the optional temperature and external sensors 705, 707 may be transmitted to a central analysis station for monitoring, control, and analysis using the communications interface 709. The central analysis station is not shown in the figure. The communication interface 709 connects a microcontroller 790 to a communication bus. The communication bus can be implemented in several ways. In one aspect, the communication bus may be implemented using an off-the-shelf communication bus such as Ethernet or RS422. Other methods such as wireless communications or power line communications, which could be implemented on the power line connecting the panels, may also be used. If bidirectional communication is used, the central analysis station may request the data collected by the microcontroller 790. Alternatively or in addition, the information acquired from sensors 703, 704, 705, 707 may be logged locally using the monitoring and logging module 711 in local memory such as the RAM 715 or the NVRAM 713.

Analysis of the information from sensors 703, 704, 705, 707 may enable detection and location of many types of failures associated with power loss in solar arrays. Smart analysis may also be used to suggest corrective measures such as cleaning or replacing a specific portion of the solar array. Analysis of sensor information may also detect power losses caused by environmental conditions or installation mistakes and prevent costly and difficult solar array testing.

Consequently, in one aspect, the microcontroller 790 simultaneously maintains the maximum power point of input power to the converter 705 from the attached DC power source or solar panel 701 based on the MPPT algorithm in the MPPT module 719 and manages the process of gathering the information from sensors 703, 704, 705, 707. The collected information may be stored in the local memory 713, 715 and transmitted to an external central analysis station. In one aspect, the microcontroller 790 uses previously defined parameters stored in the NVRAM 713 in order to operate. The information stored in the NVRAM 713 may include information about the converter 705 such as serial number, the type of communication bus used, the status update rate and the ID of the central analysis station. This information may be added to the parameters collected by the sensors before transmission.

The converters 705 may be installed during the installation of the solar array or retrofitted to existing installations. In both cases, the converters 705 may be connected to a panel junction connection box or to cables connecting the panels 701. Each converter 705 may be provided with the connectors and cabling to enable easy installation and connection to solar panels 701 and panel cables.

In one aspect, the physical interface 717 may be used to convert to a standard communication protocol and physical layer so that during installation and maintenance, the converter 705 may be connected to one of various data terminals, such as a computer or PDA. Analysis may then be implemented as software which will be run on a standard computer, an embedded platform or a proprietary device.

The installation process of the converters 705 includes connecting each converter 705 to a solar panel 701. One or more of the sensors 703, 704, 705, 707 may be used to ensure that the solar panel 701 and the converter 705 may be properly coupled together. During installation, parameters such as serial number, physical location and the array connection topology may be stored in the NVRAM 713. These parameters may be used by analysis software to detect future problems in solar panels 701 and arrays.

When the DC power sources 701 are solar panels, one of the problems facing installers of photovoltaic solar panel arrays may be safety. The solar panels 701 may be connected in series during the day when there may be sunlight. Therefore, at the final stages of installation, when several solar panels 701 are connected in series, the voltage across a string of panels may reach dangerous levels. Voltages as high as 600V may be common in domestic installations. Thus, the installer faces a danger of electrocution. The converters 705 that are connected to the panels 701 may use built-in functionality to prevent such a danger. For example, the converters 705 may include circuitry or hardware of software safety module that limits the output voltage to a safe level until a predetermined minimum load may be detected. Only after detecting this predetermined load, the microcontroller 790 ramps up the output voltage from the converter 705.

Another method of providing a safety mechanism may be to use communications between the converters 705 and the associated inverter for the string or array of panels. This communication, that may be for example a power line communication, may provide a handshake before any significant or potentially dangerous power level may be made available.

Thus, the converters 705 would wait for an analog or digital release signal from the inverter in the associated array before transferring power to inverter.

The above methodology for monitoring, control and analysis of the DC power sources 701 may be implemented on solar panels or on strings or arrays of solar panels or for other power sources such as batteries and fuel cells.

Most photovoltaic panels (mono-crystalline, polycrystalline) comprise of a series connection of photodiodes. Such a connection may be sensitive to the hot spot phenomena. In cases where one of the cells in the string may be not able to provide the current drawn from the panel, and may go into reverse bias heating up and finally burning the panel. Panel manufacturers have found a solution to this problem by splitting the series of photodiodes into several sub-strings. Each sub-string has its own bypass diode which enables the panel current to bypass a sub-string which has cells which would otherwise be in reverse bias. The bypass diode prevents the panel from burning up but prevents the specific sub-string from producing any power at all. In order to achieve the maximum power from the panel each sub-string has to be at maximum power point (MPP) without regard to the other sub-strings. Monocrystalline solar panels suffer a reduction in output once the temperature from the sunlight reaches around fifty degrees Celsius/a hundred and fifteen degrees Fahrenheit. Reductions of between twelve and fifteen percent can be expected. These may be lower than the reductions in output experienced by polycrystalline cells, but they still need to be factored into the calculations and design for any solar power system.

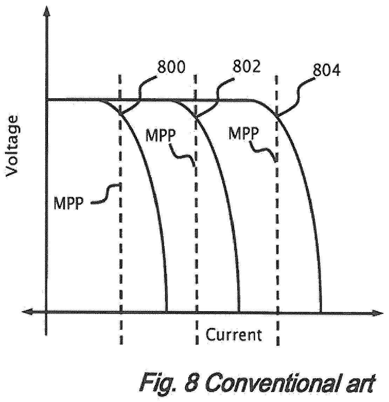

Figure 8 illustrates characteristic current-voltage curves of a single photovoltaic cell at different illumination levels. Curve 800 shows the maximum power point (MPP) for low light levels, curve 802 show the maximum power point MPP for higher light levels, and curve 804 shows the maximum power point MPP yet higher light levels assuming a constant temperature of the photovoltaic cell. As can be seen, at the different light levels the maximum power point may be achieved at nearly identical voltages, but at different currents depending on the incident solar irradiance.

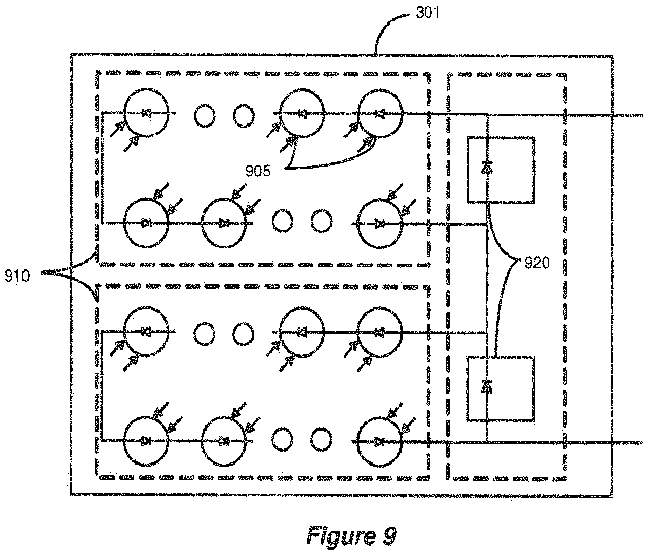

FIG. 9 illustrates an arrangement for internal connections of a solar panel 301 according to conventional art. In FIG. 9, solar panel 301 includes photovoltaic cells 905, which may be grouped into serially-connected strings 910. Strings 910 may be connected together in series. For each string 910, a bypass diode 920 may be provided so that in the event of drop in power output of one string 910, that string 910 may be bypassed via respective bypass diode 920 instead of having the cells enter a negative voltage region, which will lead to power dissipation across them and may cause them to bum out. Bypass diodes 920 may be connected in parallel across sub-strings 910 for instance according to IEC61730-2 solar safety standards. Bypass diodes 920 may also provide a current path around sub-string 910 during dark or partially shaded conditions. The current path may also allow current to flow through bypass diode 920 in the forward mode, preventing common thermal failures in string 910 such as cell breakdown or hot spots. During forward mode, bypass diode 920 may have low forward resistance to reduce the wasted power. During normal operation when all strings 910 may be irradiated, forward current will flow through strings 910 while bypass diodes 920 will operate in the reverse blocking mode. In reverse blocking mode, it may be important that bypass diodes 920 have low high- temperature reverse leakage current (IR) to achieve the high power generation efficiency for each sub-string 910. However, when current flows through bypass diodes 920 they dissipate energy. For example, if a current of 5 ampere (A) flows through bypass diode having a typically 0.7 volt forward bias voltage, the loss through bypass diode 920 may be 3.5 W. In practice the loss may easily amount to 10 W.

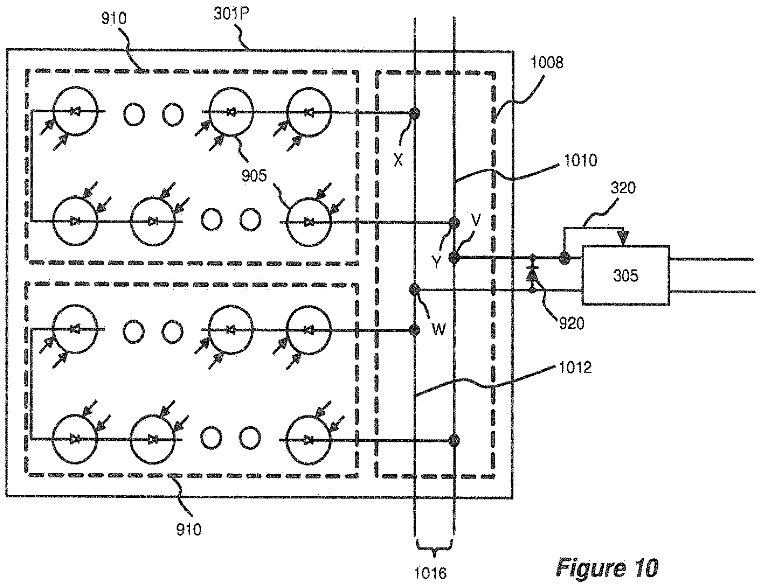

Reference is now made to Figure 10 which shows a solar panel 301P according to an aspect of the present invention. In Figure 10, solar panel 301P includes photovoltaic cells 905 interconnected together in series to form sub-strings 910. Two output nodes X and Y of serially-connected sub-strings 910 may be connected in connection box 1008 to bus-bar 1010 and bus-bar 1012 respectively. The connection of the two output nodes X and Y of strings 910 to bus-bar 1010 and bus-bar 1012 connects strings 910 in parallel giving an output 1016. Output 1016 may be applied across bypass diode 920 and to the input of converter 305 with control loop 320 which may maintain maximum power at input to converter 305 by setting the input voltage to converter 305 or by setting the input current to converter 305. Alternatively output 1016 can be connected to a load such as an inverter, a conventional direct-current to direct-current (DC-DC) converter or a bank of batteries. Typically bypass diode 920 bypasses current around strings 910 when there may be a failure in any of strings 910 or when there may be a partial shading of strings 910.

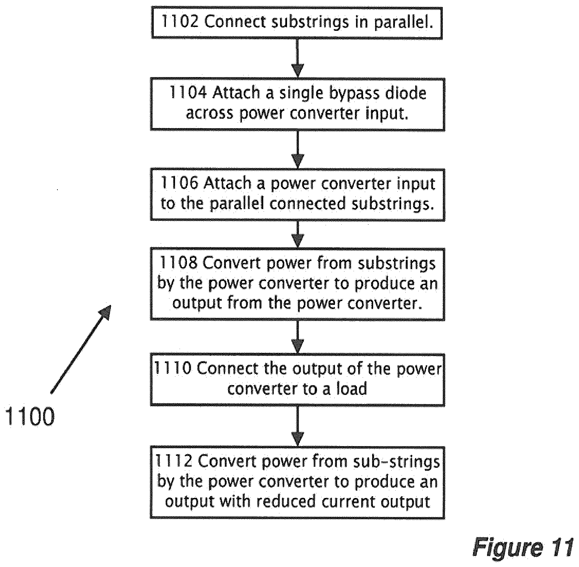

Reference is now also made to Figure 11 showing a method 1100 according various exemplary aspects. The outputs of sub strings 910 may be connected together in parallel via bus-bar 1010 and bus-bar 1012 at nodes X and Y (step 1102). A single bypass diode 920 may be connected in parallel across the input of power converter 305 (step 1104). The input of power converter 305 may be connected to bus-bar 1010 and bus-bar 1012 at nodes V and W respectively (step 1106). Power converter 305, converts the power from parallel connected sub-strings 910 to an output power at the output of power converter 305 (step 1108). The input power to power converter 305 may be determined by previously determined criterion and implemented using control loop 320. In the case of parallel connected substrings 920, the previously determined criterion may provide increased voltage output and reduced current output of power converter 305. The output terminals of power converter 305 may be then connected to a load (step 1110). The load may be typically a power grid or a bank of batteries. Typically the conversion of power from sub-strings 910 by power by power converter 305 produces an output power with reduced current (step 1112). The reduced current (step 1112) from the output of power converter 305 produces decreased energy losses (proportional to current squared) in the cables connecting the output of converter 305 to the load.

During operation of panel 301P, by virtue of the additive property of currents in parallel connections, the maximum power point (MPP) tracking of parallel-connected sub-strings 910 may also maximize currents flowing individually through parallel-connected sub- strings 910. Strings 910 contribute to the total current of panel 301P according to their input power/lighting condition. In the case where panel 301P may be made from a mono- crystalline/ polycrystalline structure; the photodiode voltage of mono-crystalline/ polycrystalline cells may change very slightly with lighting condition. A major factor for cell voltage may be temperature which may change only slightly in a single photovoltaic panel. Solar panel 301P requires a single bypass diode 920 while solar panel 301 in Figure 9 requires multiple bypass diodes 920 one for each string 910. During normal operation of panel 301P when all strings 910 may be absorbing light, bypass diode 920 passes one high temperature reverse leakage current (I_{R}) as opposed to more than one high temperature reverse leakage current (I_{R}) as shown with solar panel 301 shown in Figure 9. The voltage of the parallel connected outputs of strings 910 of panel 301P in Figure 10 may be lower than voltage output of panel 301 shown in Figure 9 but the combined current output of panel 301P in Figure 10 may be greater than the current output of panel 301 in Figure 9 for equal numbers of strings 910.

Connection of converter 305 and adjustment of control loop 320 in panel 301P (Figure 10) allows for reduced power loss in the conductors (proportional to current squared) of a load attached to the output of converter 305 whilst maintaining maximum power transfer to the load. Typically if string 910 has an output voltage Vₛ and current Iₛ for example.

Three strings 910 connected in series as in panel 301 (Figure 9) produces an output voltage 3Vₛ and current Iₛ. Three strings connected in parallel as in Figure 10 produces an output voltage Vₛ and current 3Iₛ. Connection of converter 305 input is across the three strings 910 connected in parallel in panel 301P in Figure 10. The adjustment of control loop 320 may produce an output voltage from converter 305 of 3Vₛ and current Iₛ; the power loss (current squared times cable impedance) in the cables of a load attached to the output of converter 305 (whilst converter 305 maintains maximum power transfer to the load) may be 9 times less, i.e. Iₛ squared as opposed to 3Iₛ squared.

The definite articles "a", "an" is used herein, such as "a converter", "an output connector" have the meaning of "one or more" that is "one or more converters" or "one or more output connectors".

## Claims

1. An apparatus comprising:
a plurality of photovoltaic sub-strings (910) each including serially-connected photovoltaic cells (905), wherein the photovoltaic sub-strings (910) have direct current (DC) outputs electrically connected in parallel, thereby forming a combined parallel output (1016);
a direct current (DC) power converter (305) including input terminals coupled to said combined parallel output (1016), wherein the DC power converter (305) is configured to convert an input power received at said input terminals to an output power at output terminals of the DC power converter (305); and
a single bypass diode (920) connected in parallel to said combined parallel output (1016) across the input of the DC power converter (305); and
wherein at least one of the output terminals of the DC power converter (305) is electrically connected to an output terminal of a second DC power converter (305).

2. The apparatus of claim 1, wherein said DC power converter (305) has a control loop (320) configured to maximize the input power received at said input terminals according to a previously determined criterion.

3. The apparatus of any preceding claim, wherein said bypass diode (920) shunts current during at least one condition selected from the group consisting of:
a failure of any of said photovoltaic sub-strings (910) and a partial shading of said photovoltaic sub-strings (910).

4. The apparatus of any preceding claim, wherein said single bypass diode (920) has a current rating at least equal to a total combined current of all of said plurality of photovoltaic sub-strings (910).

5. The apparatus of any preceding claim, wherein at least one of said output terminals is connectible with a wire cable to a load, whereby said DC power converter (305) is configured to reduce energy loss through said wire cable to said load by reducing current of said output power.

6. The apparatus of claim 5, wherein said load is an inverter (304).

7. The apparatus of any preceding claim, wherein said DC power converter (305) is electrically connected to said second DC power converter (305) in series, thereby forming a serial string (303) of DC power converters (305).

8. A method comprising:
connecting electrically in parallel a plurality of direct current (DC) outputs each from one of a plurality of photovoltaic sub-strings (910), to thereby form a combined parallel output (1016), wherein each photovoltaic sub-string (910) including serially-connected photovoltaic cells (905);
coupling the combined parallel output (1016) to input terminals of a direct current (DC) power converter (305);
converting, using the DC power converter (305), input power received at the input terminals to an output power at output terminals of the DC power converter (305);
conducting current through a single bypass diode (920) connected in parallel to said combined parallel output (1016) across the input of the DC power converter (305); and
wherein at least one of the output terminals of the DC power converter (305) is electrically connected to an output terminal of a second DC power converter (305).

9. The method of claim 8, further comprising: maximizing, with a control loop (320) of the DC power converter (305), input power received at said input terminals according to a previously determined criterion.

10. The method of claims 8 or 9, further comprising: maximizing the input power by setting, with the control loop (320), an input voltage at the input terminals.

11. The method of claims 8, 9, or 10, wherein said conducting of current by the bypass diode (920) occurs in response to at least one condition selected from the group consisting of:
a failure of any of said photovoltaic sub-strings (910) and a partial shading of said photovoltaic sub-strings (910).

12. The method of claims 8, 9, 10, or 11, wherein said single bypass diode (920) has a current rating at least equal to a total combined current of all of said plurality of photovoltaic sub-strings (910).

13. The method of claims 8, 9, 10, 11, or 12, wherein said DC power converter (305) converts said input power at a higher current compared to said output power at a lower current.

14. The method of claims 8, 9, 10, 11, 12, or 13, further comprising:
connecting at least one of said output terminals with a wire cable to a load; and
reducing energy loss through said wire cable to said load by reducing current of said output power.

15. The method of claims 8, 9, 10, 11, 12, 13, or 14, wherein said DC power converter (305) is electrically connected to said second DC power converter (305) in series, thereby forming a serial string (303) of DC power converters (305).

## Patentansprüche

1. Eine Vorrichtung, umfassend:
mehrere Photovoltaik-Teilstrings (910), die jeweils seriell verbundene Photovoltaikzellen (905) aufweisen, wobei die Photovoltaik-Teilstrings (910) Gleichstromausgänge (DC) aufweisen, die elektrisch parallel verbunden sind, wodurch ein kombinierter paralleler Ausgang (1016) gebildet wird;
einen Gleichstromwandler (305), der Eingangsanschlüsse einschließt, die mit dem kombinierten parallelen Ausgang (1016) gekoppelt sind, wobei der Gleichstromwandler (305) dazu ausgelegt ist, eine an den Eingangsanschlüssen empfangene Eingangsleistung in eine Ausgangsleistung an Ausgangsanschlüssen des Gleichstromwandlers (305) umzuwandeln; und eine einzelne Bypass-Diode (920), die mit dem kombinierten parallelen Ausgang (1016) über den Eingang des Gleichstromwandlers (305) parallel verbunden ist; und
wobei wenigstens einer der Ausgangsanschlüsse des Gleichstromwandlers (305) mit einem Ausgangsanschluss eines zweiten Gleichstromwandlers (305) elektrisch verbunden ist.

2. Vorrichtung nach Anspruch 1, wobei der Gleichstromwandler (305) einen Regelkreis (320) aufweist, der dazu ausgelegt ist, die an den Eingangsanschlüssen empfangene Eingangsleistung nach einem zuvor bestimmten Kriterium zu maximieren.

3. Vorrichtung nach einem der vorhergehenden Ansprüche, wobei die Bypass-Diode (920)
Strom während wenigstens einer Bedingung überbrückt, ausgewählt aus der Gruppe bestehend aus:
einem Ausfall irgendeines der Photovoltaik-Teilstrings (910) und einer teilweisen Abschattung der Photovoltaik-Teilstrings (910).

4. Vorrichtung nach einem der vorhergehenden Ansprüche, wobei die einzelne Bypass-Diode (920) eine Nennstromstärke aufweist, die wenigstens gleich einem kombinierten Gesamtstrom aller mehreren Photovoltaik-Teilstrings (910) ist.

5. Vorrichtung nach einem der vorhergehenden Ansprüche, wobei wenigstens einer der Ausgangsanschlüsse mit einem Drahtkabel an eine Last angeschlossen werden kann, wobei der Gleichstromwandler (305) dazu ausgelegt ist, den Energieverlust durch das Drahtkabel zu der Last durch Reduzieren des Stroms von der Ausgangsleistung zu reduzieren.

6. Vorrichtung nach Anspruch 5, wobei die Last ein Wechselrichter (304) ist.

7. Vorrichtung nach einem der vorhergehenden Ansprüche, wobei der Gleichstromwandler (305) in Reihe mit dem zweiten Gleichstromwandler (305) elektrisch verbunden ist, wodurch eine serieller String (303) von Gleichstromwandlern (305) gebildet wird.

8. Verfahren, umfassend:
elektrisches paralleles Verbinden mehrerer Gleichstromausgänge (DC) jeweils von einem von mehreren Photovoltaik-Teilstrings (910), um dadurch einen kombinierten parallelen Ausgang (1016) zu bilden, wobei jeder Photovoltaik-Teilstring (910) seriell verbundene Photovoltaikzellen (905) aufweist;
Koppeln des kombinierten parallelen Ausgangs (1016) an die Eingangsanschlüsse eines Gleichstromwandlers (305);
Umwandeln der an den Eingangsanschlüssen empfangenen Eingangsleistung unter Verwendung des Gleichstromwandlers (305) in eine Ausgangsleistung an den Ausgangsanschlüssen des Gleichstromwandlers (305);
Leiten von Strom durch eine einzelne Bypass-Diode (920), die mit dem kombinierten parallelen Ausgang (1016) über den Eingang des Gleichstromwandlers (305) parallel verbunden ist; und
wobei wenigstens einer der Ausgangsanschlüsse des Gleichstromwandlers (305) mit einem Ausgangsanschluss eines zweiten Gleichstromwandlers (305) elektrisch verbunden ist.

9. Verfahren nach Anspruch 8, ferner umfassend: Maximieren mit einem Regelkreis (320) des Gleichstromwandlers (305) der an den Eingangsanschlüssen empfangenen Eingangsleistung nach einem zuvor bestimmten Kriterium.

10. Verfahren nach Anspruch 8 oder 9, ferner umfassend: Maximieren der Eingangsleistung durch Einstellen einer Eingangsspannung an den Eingangsanschlüssen mit dem Regelkreis (320).

11. Verfahren nach den Ansprüchen 8, 9 oder 10, wobei das Leiten von Strom durch die Bypass-Diode (920) als Reaktion auf wenigstens eine Bedingung auftritt, ausgewählt aus der Gruppe bestehend aus:
einem Ausfall irgendeines der Photovoltaik-Teilstrings (910) und einer teilweisen Abschattung der Photovoltaik-Teilstrings (910).

12. Verfahren nach den Ansprüchen 8, 9, 10 oder 11, wobei die einzelne Bypass-Diode (920) eine Nennstromstärke aufweist, die wenigstens gleich einem kombinierten Gesamtstrom aller der mehreren Photovoltaik-Teilstrings (910) ist.

13. Verfahren nach den Ansprüchen 8, 9, 10, 11 oder 12, wobei der Gleichstromwandler (305) die Eingangsleistung mit einem höheren Strom umwandelt als die Ausgangsleistung mit einem niedrigeren Strom.

14. Verfahren nach den Ansprüchen 8, 9, 10, 11, 12 oder 13, ferner umfassend: Verbinden wenigstens eines der Ausgangsanschlüsse mit einem Drahtkabel mit einer Last; und
Reduzieren des Energieverlusts durch das Drahtkabel zur Last durch Reduzieren des Stroms der Ausgangsleistung.

15. Verfahren nach den Ansprüchen 8, 9, 10, 11, 12, 13 oder 14, wobei der Gleichstromwandler (305) in Reihe mit dem zweiten Gleichstromwandler (305) elektrisch verbunden ist, wodurch ein serieller String (303) von Gleichstromwandlern (305) gebildet wird.

## Revendications

1. Un appareil comprenant :
une pluralité de sous-chaînes photovoltaïques (910) comprenant chacune des cellules photovoltaïques connectées en série (905), dans lequel les sous-chaînes photovoltaïques (910) ont des sorties de courant continu (CC) connectées électriquement en parallèle, formant ainsi une sortie parallèle combinée (1016) ;
un convertisseur de puissance à courant continu (CC) (305) comprenant des bornes d'entrée couplées à ladite sortie parallèle combinée (1016), dans lequel le convertisseur de puissance CC (305) est configuré pour convertir une puissance d'entrée reçue auxdites bornes d'entrée en une puissance de sortie aux bornes de sortie du convertisseur de puissance CC (305) ; et
une diode de dérivation unique (920) connectée en parallèle à ladite sortie parallèle combinée (1016) à travers l'entrée du convertisseur de puissance CC (305) ; et dans lequel au moins une des bornes de sortie du convertisseur de puissance CC (305) est connectée électriquement à une borne de sortie d'un deuxième convertisseur de puissance CC (305).

2. L'appareil selon la revendication 1, dans lequel ledit convertisseur de puissance CC (305) a une boucle de commande (320) configurée pour maximiser la puissance d'entrée reçue auxdites bornes d'entrée selon un critère préalablement déterminé.

3. L'appareil selon l'une quelconque des revendications précédentes, dans lequel ladite diode de dérivation (920) shunte le courant pendant au moins une condition sélectionnée dans le groupe consistant en :
une défaillance de l'une quelconque desdites sous-chaînes photovoltaïques (910) et un ombrage partiel desdites sous-chaînes photovoltaïques (910).

4. L'appareil selon l'une quelconque des revendications précédentes, dans lequel ladite diode de dérivation unique (920) a un courant nominal au moins égal à un courant combiné total de l'ensemble de ladite pluralité de sous-chaînes photovoltaïques (910).

5. L'appareil selon l'une quelconque des revendications précédentes, dans lequel au moins une desdites bornes de sortie peut être connectée par un câble métallique à une charge, de façon que ledit convertisseur de puissance CC (305) est configuré pour réduire la perte d'énergie à travers ledit câble métallique vers ladite charge en réduisant le courant de ladite puissance de sortie.

6. L'appareil selon la revendication 5, dans lequel ladite charge est un onduleur (304).

7. L'appareil selon l'une quelconque des revendications précédentes, dans lequel ledit convertisseur de puissance CC (305) est connecté électriquement en série audit deuxième convertisseur de puissance CC (305), formant ainsi une chaîne sérielle (303) de convertisseurs de puissance CC (305).

8. Un procédé comprenant les étapes consistant à :
connecter électriquement en parallèle une pluralité de sorties de courant continu (CC) provenant chacune d'une pluralité de sous-chaînes photovoltaïques (910), pour former ainsi une sortie parallèle combinée (1016), dans lequel chaque sous-chaîne photovoltaïque (910) comprend des cellules photovoltaïques connectées en série (905) ;
coupler la sortie parallèle combinée (1016) aux bornes d'entrée d'un convertisseur de puissance à courant continu (CC) (305) ;
convertir, en utilisant le convertisseur de puissance CC (305), la puissance d'entrée reçue aux bornes d'entrée en une puissance de sortie aux bornes de sortie du convertisseur de puissance CC (305) ;
conduire le courant à travers une seule diode de dérivation (920) connectée en parallèle à ladite sortie parallèle combinée (1016) à travers l'entrée du convertisseur de puissance CC (305) ; et
dans lequel au moins une des bornes de sortie du convertisseur de puissance CC (305) est connectée électriquement à une borne de sortie d'un deuxième convertisseur de puissance CC (305).

9. Le procédé selon la revendication 8, comprenant en outre la maximisation, par une boucle de commande (320) du convertisseur de puissance CC (305), de la puissance d'entrée reçue auxdites bornes d'entrée selon un critère préalablement déterminé.

10. Le procédé selon les revendications 8 ou 9, comprenant en outre : la maximisation de la puissance d'entrée en fixant, avec la boucle de commande (320), une tension d'entrée aux bornes d'entrée.

11. Le procédé selon les revendications 8, 9 ou 10, dans lequel ladite conduction de courant par la diode de dérivation (920) se produit en réponse à au moins une condition choisie dans le groupe consistant en :
une défaillance de l'une quelconque desdites sous-chaînes photovoltaïques (910) et un ombrage partiel desdits sous-ensembles photovoltaïques (910).

12. Le procédé selon les revendications 8, 9, 10 ou 11, dans lequel ladite diode de dérivation unique (920) a un courant nominal au moins égal à un courant combiné total de l'ensemble de ladite pluralité de sous-chaînes photovoltaïques (910) ;

13. Le procédé selon les revendications 8, 9, 10, 11 ou 12, dans lequel ledit convertisseur de puissance CC (305) convertit ladite puissance d'entrée à un courant plus élevé par comparaison avec ladite puissance de sortie à un courant plus faible.

14. Le procédé selon les revendications 8, 9, 10, 11, 12 ou 13, comprenant en outre :
la connexion d'au moins une desdites bornes de sortie avec un câble métallique à une charge ; et
la réduction de la perte d'énergie à travers ledit câble métallique jusqu'à ladite charge en réduisant le courant de ladite puissance de sortie.

15. Le procédé selon les revendications 8, 9, 10, 11, 12, 13 ou 14,
dans lequel ledit convertisseur de puissance CC (305) est connecté électriquement en série audit deuxième convertisseur de puissance CC (305), formant ainsi une chaîne sérielle (303) de convertisseurs de puissance CC (305).
